Europäisches Patentamt

European Patent Office

Office européen des brevets

(11) Veröffentlichungsnummer: **0 256 438**
**A1**

(12) **EUROPÄISCHE PATENTANMELDUNG**

(21) Anmeldenummer: **87111355.1**

(22) Anmeldetag: **05.08.87**

(51) Int. Cl.⁴: **A61B 17/22** , G01H 3/10

(30) Priorität: **18.08.86 DE 3627947**

(43) Veröffentlichungstag der Anmeldung:
**24.02.88 Patentblatt  88/08**

(84) Benannte Vertragsstaaten:
**DE FR GB NL**

(71) Anmelder: **Siemens Aktiengesellschaft Berlin und München**
**Wittelsbacherplatz 2**
**D-8000 München 2(DE)**

(72) Erfinder: **Reichenberger, Helmut, Dr. Dipl.-Phys.**
**Begonienstrasse 28**
**D-8501 Eckental(DE)**
Erfinder: **Naser, Georg, Dipl.-Ing. (FH)**
**Karlstrasse 10**
**D-8502 Zirndorf(DE)**

(54) **Sensor für die Erfassung von Stosswellenimpulsen.**

(57) Der Sensor für die Erfassung von Stoßwellenimpulsen umfaßt eine dünne Metallfolie (17). Die Metallfolie (17) wird in den Fokusbereich (F) einer Stoßwellenquelle (19), vorzugsweise eines Lithotripters, eingebracht. Ihre Fläche ist senkrecht zur Hauptausbreitungsrichtung (Z) der Stoßwellenimpulse (23) angeordnet. Bei Auftreffen der Stoßwellenimpulse (23) auf der Metallfolie (17) bildet sich am Auftreffort eine beulenartige Materialverformung (29) heraus. Die Verformung (29) läßt sich optisch vermessen, z. B. nach Ort, Durchmesser, Tiefe, Profil und/oder Volumen auswerten, woraus Rückschlüsse auf die Zentrierung und Leistung der Stoßwellenquelle (19) möglich sind.

FIG 2

EP 0 256 438 A1

## Sensor für die Erfassung von Stoßwellenimpulsen

Die Erfindung betrifft einen Sensor für die Erfassung von Stoßwellenimpulsen, die in einem Fokusbereich fokussiert sind.

Im Betrieb einer Stoßwellenquelle, z. B. eines Lithotripters zur Nierensteinzertrümmerung, bei welchem ein Stoßwellenimpuls mit Hilfe einer elektrischen Spule erzeugt wird (vgl. DE-OS 33 28 051), sind von Zeit zu Zeit Überprüfungen der Funktion angebracht. Solche Überprüfungen betreffen beispielsweise die Fokuslage, die Druckverteilung oder die Druckamplitude des Stoßwellenimpulses. Die Überprüfungen sind notwendig nach Erstmontage, nach Umbau, bei einem Service oder bei einer Reparatur der Stoßwellenquelle. Wird beispielsweise das den Stoßwellenimpuls fokussierende Mittel (wie z. B. eine akustische Linse oder ein Reflektor) ausgetauscht, so muß hinterher geprüft werden, ob eine identische Fokuslage im Vergleich zur Situation vor dem Austausch vorhanden ist.

Ein Stoßwellensensor, der insbesondere für die Lithotripsie verwendet werden kann, ist z. B. aus der DE-OS 34 37 976 bekannt.

Die Erfindung beruht auf der Überlegung, daß als Prüfmittel für eine Funktionsüberprüfung, die nicht während der fortlaufenden Therapiebehandlung eines Patienten stattfindet, auch Stoßwellensensoren geeignet sind, welche erst eine gewisse Zeit nach Einwirkung von Stoßwellenimpulsen eine Auswertung erlauben. Es kommen also für diesen Überprüfungsfall auch Stoßwellenindikatoren oder -sensoren infrage, bei denen sowohl eine unmittelbare Beobachtung des Auftreffpunktes der Stoßwellenimpulse, als auch eine nachträgliche Auswertung, z. B. Abschätzung der integral empfangenen Energie, möglich ist. Neben der Herstellbarkeit und dem Preis für die Überprüfung ist die leichte Handhabbarkeit des Prüfmittels oder Sensors von Bedeutung.

Aufgabe vorliegender Erfindung ist es, einen Sensor der eingangs genannten Art so auszugestalten, daß mittels einer einfachen (insbesondere optischen) Kontrolle eine Aussage über die Zentrierung der Stoßwellenquelle möglich ist.

Diese Aufgabe wird erfindungsgemäß dadurch gelöst, daß der Sensor eine dünne Metallfolie umfaßt, die im Fokusbereich senkrecht zur Hauptausbreitungsrichtung der Stoßwellenimpulse positionierbar ist.

Vorteil dieses Sensors ist es, daß durch Betrachtung von Vorder-oder Rückseite der Metallfolie mit dem bloßen oder bewaffneten Auge die Lage der Verformung oder Ausbeulung, die durch das Auftreffen der Stoßwellenimpulse verursacht wird, erfaßt werden kann. Die Lage der Verformung ist ein Maß für die Stellung der Stoßwellenquelle bezüglich der gewünschten Hauptausbreitungsrichtung der Stoßwellen. Ist auf der Metallfolie eine Markierung oder Skala angebracht, so kann eine Abweichung von der Zentralachse der Stoßwellenquelle auch quantitativ festgestellt werden. Der Sensor ist weitgehend störunanfällig, da auf elektrische Komponenten, wie beispielsweise Meßwertaufnehmer, Zuleitungen, elektrische Kontaktierung, etc., prinzipiell verzichtet wird.

Die optische Auswertung, d. h. die Bestimmung beispielsweise der Lage der durch die Stoßwellenimpulse hervorgerufenen Verformung, kann entweder in situ oder aber auch in einem getrennten Auswertegerät erfolgen. Solche Auswertegeräte sind auf dem Gebiet der Materialprüfung an sich bekannt. Mit ihrer Hilfe können bestimmte Größen der Verformung, wie beispielsweise deren Durchmesser, deren lokale Tiefe, deren Profil oder deren Volumen, erfaßt werden.

Durch Vergleich der Verformung mit einer empirisch gewonnenen Kalibrierung, z. B. einer mechanischen Lehre mit einer Norm-Verformung, können für eine bestimmte Stoßwellenquelle quantitative Angaben, wie beispielsweise Druck oder Intensität der auftreffenden Stoßwellenimpulse, und/oder Trendangaben, wie beispielsweise Angaben über die Leistung der Stoßwellenquelle während längerer Betriebszeiten, gemacht werden.

Weitere Vorteile und Ausgestaltungen der Erfindung ergeben sich aus der Beschreibung von Ausführungsbeispielen anhand der Figuren. Es zeigen:

Fig. 1 einen Ankoppelkörper mit integrierter Metallfolie als Sensor im Aufblick,

Fig. 2 einen Querschnitt durch den Ankoppelkörper gemäß Fig. 1, der auf ein Stoßwellenrohr aufgesetzt ist,

Fig. 3 einen Sensor mit in einem Rahmen eingespannter Metallfolie und

Fig. 4 einen Sensor mit einer Metallfolie innerhalb einer flexiblen Kapsel.

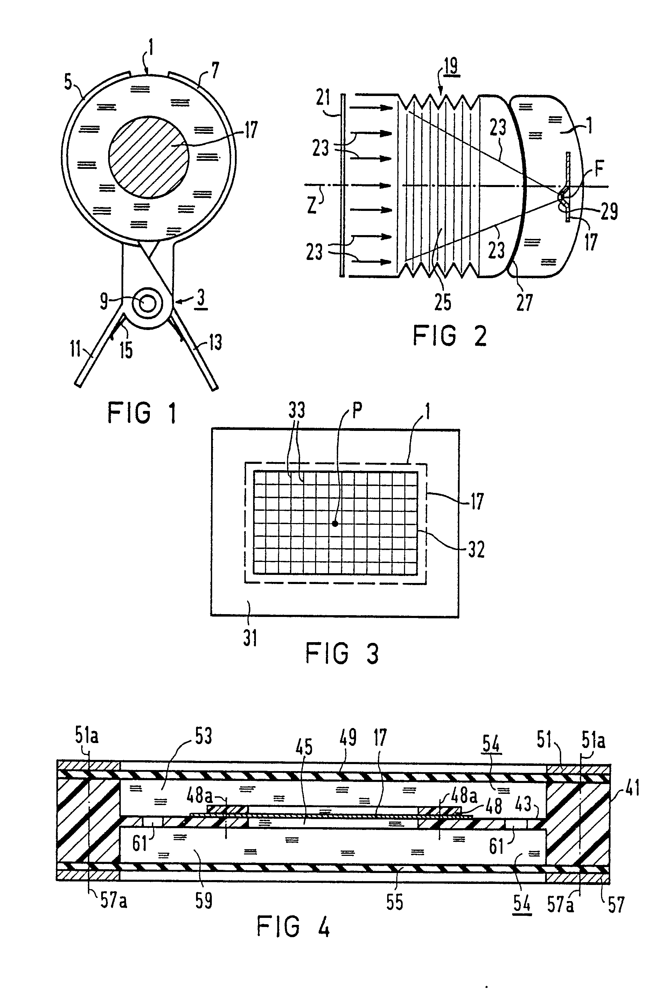

Nach Fig. 1 ist ein scheibenförmiger Ankoppelkörper 1 für Stoßwellen in einer Klemmzange 3 eingespannt. Der Ankoppelkörper 1 besteht aus einem elastischen, formstabilen Material, wie beispielsweise einem Hydrogel.

Die Klemmzange 3 ist ähnlich einer Wäscheklammer aufgebaut. Sie umfaßt im wesentlichen zwei halbkreisförmige Einklemmschenkel 5, 7, die über eine Drehachse 9 mit Handhabungsschenkeln 11 bzw. 13 verbunden sind. Zwischen den beiden Handhabungsschenkeln 11, 13 liegt eine Spreizfeder 15, die im eingespannten Zustand den Einfaßdruck auf den Ankoppelkörper 1 ausübt. Zum Herausnehmen des Ankoppelkörpers 1 brauchen die beiden Handhabungsschenkel 11, 13 nur von Hand aufeinanderzu gedrückt zu werden.

Innerhalb des Ankoppelkörpers 1 ist eine Metallfolie 17 eingelassen. Die Metallfolie 17 ist dabei beispielsweise in den An koppelkörper 1 zentrisch eingegossen oder zwischen zwei Teilankoppelkörpern zwischengelegt. Die Metallfolie 17 kann beispielsweise mit einem Fixierelement (nicht gezeigt) an einem äußeren Halteelement des Ankoppelkörpers 1, hier an einem der Einklemmschenkel 5 oder 7, befestigt sein.

Die Metallfolie 17 ist vorzugsweise aus einem Material mit einer geringen Elastizität, einer hohen Streckgrenze und einer hohen akustischen Impedanz gefertigt. Es kommen somit beispielsweise eine Bleifolie, eine Zinnfolie, einer Kupferfolie oder eine Goldfolie infrage. Die Metallfolie 17 weist vorzugsweise eine Dicke zwischen 10 μm und 200 μm auf. Sie ist vorzugsweise mit einer Markierung oder Skala versehen, die beispielsweise ähnlich einer Zielscheibe aus Sektoren und Kreisringen aufgebaut ist. Der Durchmesser der Metallfolie 17 kann zwischen 2 cm und 7 cm liegen.

In Fig. 2 ist der Ankoppelkörper 1 in Verbindung mit einer Stoßwellenquelle 19 in Seitenansicht dargestellt. Auf die Darstellung der Halteelemente 5, 7 des Ankoppelkörpers 1 wurde hier verzichtet.

Die Stoßwellenquelle 19 umfaßt hier einen Stoßwellengenerator 21 zur Erzeugung eines Stoßwellenimpulses 23. Dieser Stoßwellengenerator 21 beruht insbesondere auf dem elektrodynamischen Prinzip und enthält eine Membran, die von einer Flachspule bei deren Erregung schlagartig wegbewegt wird. Nach Durchlaufen einer durch einen Faltenbalg einstellbaren Vorlaufstrecke 25, die ein (nicht näher gezeigtes ) Fokussierungsmittel (z. B. eine Linse) für den Stoßwellenimpuls 23 enthält, tritt der nunmehr fokussierte Stoßwellenimpuls 23 aus einer Auskoppelmembran 27 in den angrenzenden Ankoppelkörper 1 ein. Der Ankoppelkörper 1 ist so dimensioniert, daß der Bereich des Fokus F des Stoßwellenimpulses 23 innerhalb des Ankoppelkörpers 1 liegt.

Die Stoßwellenquelle 19 weist eine Zentrumslinie Z auf, die bei korrekt justierter Stoßwellenquelle 19 durch den Fokus F ver läuft. Die Zentrumslinie Z ist dann gleichzeitig die Hauptausbreitungsrichtung für den Stoßwellenimpuls 23. Wie in Fig. 2 gezeigt, kann sich eine gewisse Fehlpositionierung zwischen tatsächlichem Fokus F und Zentrallinie Z ergeben, die es zu ermitteln gilt.

Die innerhalb des Ankoppelkörpers 1 befindliche Metallfolie 17 wird mit diesem so positioniert, daß sie auf Höhe des Fokus F zentral und senkrecht zur gewünschten Hauptausbreitungsrichtung Z liegt. Anstelle einer Positionierung genau im gewünschten Fokus, also auf der Linie Z, kann das Zentrum der Folie 17 auch im näheren Fokusbereich angeordnet sein. Als Fokus oder Fokusbereich F wird in diesem Zusammenhang derjenige Wirkungsbereich des Stoßwellenimpulses 23 verstanden, z. B. die -6 dB-Zone, in welchem ein nennenswerter Einfluß auf die Verformung der Metallfolie 17 stattfindet. Dabei muß nicht notwendigerweise auf einen einzigen Stoßwellenimpuls 17 abgestellt werden; es wird sich häufig um eine Vielzahl von (beispielsweise 200) Stoßwellenimpulsen 23 handeln.

Bei Auftreffen der Stoßwellenimpulse 23 bildet sich in der Metallfolie 17 eine Ausbeulung oder Verformung 29 (oder auch ein Loch, vgl. unten) heraus. Die Verformung 29 erstreckt sich aufgrund von Zugkräften, die in Verbindung mit dem Auftreffen des Stoßwellenimpulses 23 auftreten, nach rückwärts, also in Richtung auf die Stoßwellenquelle 19. Anhand der auf der Metallfolie 17 aufgebrachten Markierung oder Skala kann eine Abweichung des Auftreffortes der Stoßwellenimpulse 23 (also des tatsächlichen Fokusbereichs F) vom Zentrum der Metallfolie 17, welches aufgrund der bevorzugt gewählten Positionierung auf der Zentrumslinie Z liegt, quantitativ erfaßt werden.

Versuche haben gezeigt, daß je nach Folienmaterial, Foliendicke und Stoßwellenimpulszahl auch ein Loch in der Metallfolie 17 entstehen kann. Ein solches Loch kann, ähnlich wie bei der Verformung 29 später beschrieben, optisch ausgewertet werden.

Wurde beispielsweise das Fokussierungselement in der Vorlaufstrecke 25 der Stoßwellenquelle 19 bei einer Reparatur oder Servicearbeit ausgetauscht, so ist aufgrund der Streubreite bei der Herstellung von Fokussierungsmitteln nicht auszuschließen, daß nach der Reparatur der Fokusbereich F außerhalb der Zentrumslinie Z liegt. Anhand der Verformung 29 auf der Metallfolie 17 kann eine solche Abweichung quantitativ erfaßt werden. Das Servicepersonal ist dann in der Lage, das eingetauschte Fokussierungsmittel über Justierelemente so auszurichten, daß der Fokus F wieder auf der Zentrumslinie Z liegt. Die neue Justierung kann anhand einer neuen Verformung 29, die sich bei einem anschließenden Betrieb der Stoßwellenquelle 19 ergibt, überprüft werden. Dabei kann es zweckmäßig sein, eine neue Metallfolie 17 (eventuell mit einem neuen Ankoppelkörper 1) zu gebrauchen, damit sich nicht mehrere Verformungen 29 auf derselben Metallfolie 17 überschneiden.

Es ist zweckmäßig, eine Auswerteeinrichtung vorzusehen, anhand welcher Aussagen über den Durchmesser, die Tiefe, das Profil usw. der Verformung 29 getroffen werden können. Solche Auswerteeinrichtungen sind auf dem Gebiet der Materialprüfung an sich bekannt. Desweiteren kann es vorteilhaft sein, eine mechanische Lehre oder Schablone vorzusehen, die werksseitig für eine bestimmte, vorgegebene Stoßwellenquelle 19 kalibriert ist. Bei ordnungsgemäßer Einstellung sollte die nach der Reparatur oder der Servicearbeit auftretende Verformung 29 identisch zu der Norm-Verformung der Schablone sein.

Abweichungen bezüglich des Durchmessers, der Tiefe, des Profils und des Volumens der Verformung 29 können leicht festgestellt werden. Hieraus können Korrektur-oder Justiermaßnahmen hergeleitet werden.

In Fig. 3 sind gleiche Teile mit denselben Bezugszeichen versehen wie in Fig. 1 und 2.

Eine rechteckige Metallfolie 17 ist hier in einem Rahmen 31 mit einem zentralen rechteckigen Ausschnitt oder Loch 32 einge spannt. Der Rahmen 31 kann beispielsweise ähnlich wie ein Dia-Rahmen aufgebaut sein. Die Metallfolie 17 ist hier mit einer rasterartigen Markierung 33 versehen, die aus einer Anzahl von parallelen senkrechten und waagerechten Strichen besteht. Die Metallfolie 17 ist in der Mitte des Ausschnitts 32 ist mit einem Punkt P markiert.

Der Rahmen 31 mit eingespannter Metallfolie 17 wird so an der Auskoppelmembran einer Stoßwellenquelle plaziert, daß die Mittellinie oder Zentrumsachse der Stoßwellenquelle durch den Punkt P verläuft. Bei Auftreffen einer Anzahl von Stoßwellenimpulsen verformt sich die Metallfolie 17 im Fokusbereich der Stoßwellenimpulse. Anhand der Markierung 33 kann eine Abweichung zwischen Fokusbereich und dem Punkt P optisch ausgewertet werden. Hierfür kann das unbewaffnete Auge genügen.

In Fig. 4 sind wiederum gleiche Teile mit denselben Bezugszeichen wie in Fig. 1 versehen.

Es ist ein Ring 41 dargestellt, welcher in der Mitte seines inneren Rands und parallel zu seinen beiden Stirnseiten eine Scheidewand 43 aufweist. Die Scheidewand 43 ist mit einer zentralen Öffnung 45 versehen, die von einer Metallfolie 17 überdeckt wird. Der Durchmesser der Öffnung 45 und damit die Auftrefffläche auf die Metallfolie 47 für den Stoßwellenimpuls beträgt z. B. ca. 40 mm. Der Ring 41 besteht aus Kunststoff, z. B. aus Polyvenylchlorid (PVC). Die Metallfolie 17 wird von einem Spannring 48 so über der zentralen Öffnung 45 festgehalten, daß die Metallfolie 17 faltenfrei die zentrale Öffnung 45 abdeckt. Dazu können beispielsweise konventionelle Kunststoffschrauben 48a durch den Spannring 48 geführt und in die Scheidewand 43 eingeschraubt werden. Auch andere Befestigungen können gewählt werden.

Am stirnseitigen oberen Rand des Ringes 41 ist eine erste Ankoppelfolie oder Ankoppelmembran 49 von einem ersten Haltering 51 durch Befestigungsmittel 51a eingespannt. Die Ankoppelfolie 49 ist beispielsweise aus Gummi, bevorzugt EPDM-Gummi gefertigt, mit einer Stärke zwischen 1 mm und 2 mm und einem Durchmesser von ca. 120 mm. Die Ankoppelfolie 49 ist so zwischen der Stirnseite des Ringes 41 und dem Haltering 51 eingespannt, daß sie das Innere des Ringes 41 faltenfrei in leicht gespanntem Zustand abdeckt.

Es bildet sich somit zwischen der ersten Ankoppelfolie 49 einerseits und der Scheidewand 43 zusammen mit der Metallfolie 17 andererseits ein - scheibenartiger erster Zwischenraum 53, der randseitig von dem Ring 41 begrenzt ist. Der Zwischenraum 53 ist mit einem Kopplungsmedium 54 für akustische Stoßwellen, z. B. mit entgastem destillierten Wasser, gefüllt. Als Füllung kommt ebenfalls ein Öl, wie beispielsweise Rizinusöl, infrage.

Die Konfiguration von erster Ankoppelfolie 49, erstem Haltering 51 und erstem Zwischenraum 53 ist spiegelbildlich auch auf der unteren Seite des Sensors vorgesehen. Dort ist somit eine zweite Ankoppelfolie 55 von einem zweiten Haltering 57 gegen die untere Stirnfläche des Rings 41 durch Befestigungsmittel 57a fixiert. Dadurch wird ein zweiter Zwischenraum 59 gebildet, welcher analog zur oberen Kammer des Sensors ausgeführt ist. Auch er ist mit dem Kopplungsmedium 54 gefüllt. Die nicht eingespannten Teile der Ankoppelfolien 49, 55 haben z. B. einen Durchmesser von ca. 100 mm. Die Ankoppelfolien 49, 55 sind zweckmäßigerweise durchsichtig, um eine Begutachtung der Metallfolie 17 ohne Demontage des Gehäuses vornehmen zu können.

Der erste Zwischenraum 53 ist mit dem zweiten Zwischenraum 59 über eine oder bevorzugt mehrere Durchleitöffnungen 61 in der Scheidewand 43 verbunden. Durch die Durchleitöffnung 61 findet ein Druckausgleich zwischen dem ersten und dem zweiten Zwischenraum 53 bzw. 59 statt. Auf diese Weise ist sichergestellt, daß die Metallfolie 17, die etwa in der Mitte der Ankoppelfo lien 49, 55 angeordnet ist, beidseitig mit dem gleichen statischen Druck belastet wird und nicht einseitig vorgespannt ist.

Der beschriebene Sensor ist leicht handhabbar und kann als Ganzes in den Fokusbereich eines Stoßwellengenerators eingesetzt werden. Trotz unterschiedlicher äußerer Bedingungen zu beiden Seiten des Sensors ist die Metallfolie 17 einem definierten Zustand ausgesetzt. Die leichte Handhabbarkeit und die einfache Auswertbarkeit einer beulenartigen Verformung 29 in der Metallfolie 17 aufgrund von aufgetroffenen Stoßwellenimpulsen sind die gleichen, wie bei den vorhergehenden Ausführungsformen beschrieben.

Es kann zweckmäßig sein, die Metallfolie 17 in einer Vorrichtung, die wie ein Schieber aufgebaut ist, einzuspannen. Über eine passende Öffnung im Gehäuse kann der Schieber zusammen mit der Metallfolie 17 eingeführt und zum Austausch oder zur Inaugenscheinnahme wieder herausgeführt werden.

**Ansprüche**

1. Sensor für die Erfassung von Stoßwellenimpulsen, die in einem Fokusbereich fokussiert sind, **dadurch gekennzeichnet, daß** er eine dünne Metallfolie (17) umfaßt, die im Fokusbereich (F) senkrecht zur Hauptausbreitungsrichtung (Z) der Stoßwellenimpulse (23) positionierbar ist.

2. Sensor nach Anspruch 1, **dadurch gekennzeichnet, daß** die Metallfolie (17) aus einem Material mit einer geringen Elastizität, einer hohen Streckgrenze und einer hohen akustischen Impedanz besteht.

3. Sensor nach Anspruch 1 oder 2, **dadurch gekennzeichnet, daß** die Metallfolie (17) eine Bleifolie ist.

4. Sensor nach Anspruch 1 oder 2, **dadurch gekennzeichnet, daß** die Metallfolie (17) eine Zinnfolie ist.

5. Sensor nach Anspruch 1 oder 2, **dadurch gekennzeichnet, daß** die Metallfolie (17) eine Kupferfolie ist.

6. Sensor nach Anspruch 1 oder 2, **dadurch gekennzeichnet, daß** die Metallfolie (17) eine Goldfolie ist.

7. Sensor nach einem der Ansprüche 1 bis 6, **dadurch gekennzeichnet, daß** die Metallfolie (17) zwischen 10 μm und 200 μm dick ist.

8. Sensor nach einem der Ansprüche 1 bis 7, **dadurch gekennzeichnet, daß** die Metallfolie (17) in ein elastisches, formstabiles Material (1) eingebettet ist.

9. Sensor nach Anspruch 8, **dadurch gekennzeichnet, daß** das Material (1) ein Hydrogel ist.

10. Sensor nach einem der Ansprüche 1 bis 9, **dadurch gekennzeichnet, daß** die Metallfolie (17) in einem Rahmen (31) eingespannt ist.

11. Sensor nach einem der Ansprüche 1 bis 10, **dadurch gekennzeichnet, daß** die Metallfolie (17) in einer mit einem Koppelmedium (54) gefüllten, elastischen Kapselung (41, 49, 55) angeordnet ist.

12. Sensor nach einem der Ansprüche 1 bis 11, **dadurch gekennzeichnet, daß** die Metallfolie (17) einen Durchmesser zwischen 2 cm und 7 cm aufweist.

13. Sensor nach einem der Ansprüche 1 bis 12, **dadurch gekennzeichnet, daß** eine mechanische Schablone vorgesehen ist, in die die Metallfolie (17) einlegbar ist, so daß der Abstand zwischen der Metallfolie (17) und der Schablone feststellbar ist.

14. Sensor nach einem der Ansprüche 1 bis 13, **dadurch gekennzeichnet, daß** die Metallfolie (17) mit einer Markierung (33) versehen ist, anhand derer eine Abweichung des Auftrefforts der Stoßwellenimpulse (23) vom Zentrum (P) der Metallfolie (17) quantitativ erfaßbar ist.

0 256 438

FIG 1

FIG 2

FIG 3

FIG 4

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| P,X | EP-A-0 211 680 (ST. THOMAS' HOSPITAL) <br> * Zusammenfassung; Seite 5, Zeilen 24-29 * | 1-3 | A 61 B 17/22 <br> G 01 H 3/10 |
| Y | | 8,9 | |
| | --- | | |
| Y | US-A-4 453 408 (CLAYMAN) <br> * Zusammenfassung; Spalte 4, Zeilen 27-33 * | 8,9 | |
| | --- | | |
| A | EP-A-0 018 269 (EASTMAN KODAK CO.) <br> * Figur 1; Seite 3, Zeile 30 - Seite 5, Zeile 19 * | 1 | |
| | --- | | RECHERCHIERTE SACHGEBIETE (Int Cl 4) |
| D,A | EP-A-0 133 665 (SIEMENS AG) <br> . <br> * Figur 1; Zusammenfassung * & DE-A-3 328 051 | | A 61 B <br> G 01 H |
| | --- | | |
| D,A | EP-A-0 179 983 (DORNIER SYSTEM GmbH) <br> * Figur 2; Zusammenfassung * & DE-A-3 437 976 | | |
| | ----- | | |

Der vorliegende Recherchenbericht wurde für alle Patentansprüche erstellt

| Recherchenort | Abschlußdatum der Recherche | Prüfer |
|---|---|---|
| DEN HAAG | 16-10-1987 | JONES T.M. |

KATEGORIE DER GENANNTEN DOKUMENTE
X von besonderer Bedeutung allein betrachtet
Y von besonderer Bedeutung in Verbindung mit einer anderen Veröffentlichung derselben Kategorie
A technologischer Hintergrund
O nichtschriftliche Offenbarung
P Zwischenliteratur
T der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument